# EUROPEAN PATENT APPLICATION

(11) **EP 2 654 314 A1**
(43) Date of publication of application: **23.10.2013**
(21) Application number: 12195441.6
(22) Date of filing: 04.12.2012
(51) Int. Cl.: H04N 21/431, H04N 21/482

(54) **Electronic apparatus and electronic program guide displaying method**

(30) Priority: 20.04.2012 JP 2012096704
(71) Applicant: Kabushiki Kaisha Toshiba, Tokyo 105-8001 (JP)
(72) Inventor: Kurita, Yukihiro, Tokyo, 105-8001 (JP)
(74) Representative: HOFFMANN EITLE

(57) **Abstract**

According to one embodiment, an apparatus includes a display controller (305B) configured to display an program guide based on the program guide includes a program table in which information of programs that are broadcasted in a time period from a first time of a first date to a time which is first minutes after the first time of the first date is displayed, and a date display area includes sections corresponding to of dates, to display, in the program table, information of programs which are broadcasted in a time period from the first time of a second date corresponding to a second section in the date display area to a time which is the first minutes after the first time of the second date, based on the program table data, when it is detected that a tapping operation is performed on the second section.

## Description

Embodiments described herein relate generally to an electronic display apparatus and an electronic program guide displaying method.

At present, electronic program guides (EPG: Electronic Program Guide) are widely used to perform programmed recording and programmed viewing of TV programs.

When an electronic program guide is displayed by a machine in which a touch panel is provided on a display panel, it is required to provide a suitable operation method for changing the display contents of a program table in the electronic program guide.

A general architecture that implements the various features of the embodiments will now be described with reference to the drawings. The drawings and the associated descriptions are provided to illustrate the embodiments and not to limit the scope of the invention.
FIG. 1 is an exemplary diagram illustrating an external appearance of an electronic apparatus according to an embodiment.
FIG. 2 is an exemplary block diagram illustrating a system configuration of the electronic apparatus according to the embodiment.
FIG. 3 is an exemplary diagram illustrating a structure of a television viewing program according to the embodiment.
FIG. 4 is an exemplary diagram illustrating an example of an electronic program guide which is displayed on an LCD based on EPG display data that is generated by the television viewing program.
FIG. 5 is an exemplary diagram illustrating the electronic program guide at the time when a touching operation is performed on a date section which corresponds to "November 1 (Wed)".
FIG. 6 is an exemplary diagram illustrating the electronic program guide at the time when a tapping operation is performed on the date section which corresponds to "November 1 (Wed)".
FIG. 7 is an exemplary diagram illustrating the electronic program guide at the time when a touching operation is performed on a date section which corresponds to "October 30 (Mon)" in the electronic program guide.
FIG. 8 is an exemplary diagram illustrating the electronic program guide when a sliding operation is started from the state illustrated in FIG. 7.
FIG. 9 is an exemplary diagram illustrating time period regions which are set in the date sections.
FIG. 10 is an exemplary diagram illustrating the electronic program guide for which a sliding operation is being performed.
FIG. 11 is an exemplary diagram illustrating the electronic program guide at the time when a sliding operation is finished.
FIG. 12 is an exemplary diagram illustrating the electronic program guide at the time when a pinch-in operation is performed.
FIG. 13 is an exemplary diagram illustrating a date mark in the date section illustrated in FIG. 4 and a date mark in the date section illustrated in FIG. 12.
FIG. 14 is an exemplary diagram illustrating the electronic program guide at the time when a pinch-out operation is performed.
FIG. 15 is an exemplary diagram illustrating the date mark in the date section illustrated in FIG. 4 and a date mark in the date section illustrated in FIG. 14.
FIG. 16 is an exemplary flowchart illustrating electronic program guide display processing performed by an EPG display processor when the electronic program guide is displayed.
FIG. 17 is an exemplary diagram illustrating the electronic program guide at the time when a touching operation is performed on the date section which corresponds to "October 30 (Mon)" in the electronic program guide.
FIG. 18 is an exemplary flowchart illustrating electronic program guide display processing performed by the EPG display processor when the electronic program guide is displayed.

Various embodiments will be described hereinafter with reference to the accompanying drawings.

In general, according to one embodiment, an electronic apparatus includes a display, an detector, a receiver, a generating module, and a display controller. The detector is configured to detect an operation position on the display. The receiver is configured to receive electronic program guide data comprising information of first and second programs, the first programs being broadcasted and the second programs being not yet broadcasted. The generating module is configured to generate program table data based on the electronic program guide data. The display controller is configured to display, on the display, an electronic program guide and a date display area, the electronic program guide comprising a program table including information of programs broadcasted in a time period from a first time of a first date to a second time after the first time of the first date, the date display area comprising date sections corresponding to dates of programs. The display controller is configured to display, in the program table, information of programs broadcasted in a time period from the first time of a second date to the second time of the second date, if a tapping operation is detected on the second date section.

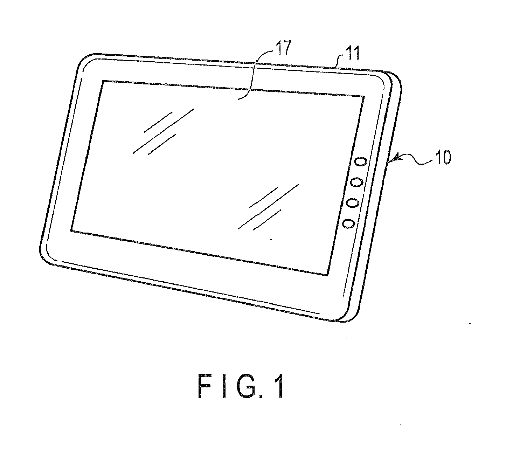

First, a structure of an electronic apparatus according to the present embodiment will be explained hereinafter with reference to FIG. 1. The electronic apparatus can be realized as a portable terminal, such as a tablet personal computer, a laptop or notebook personal computer, and a PDA. In the following explanation, suppose that the electronic apparatus is realized as tablet personal computer 10 (hereinafter referred to as "computer 10").

FIG. 1 is a diagram illustrating an external appearance of the computer 10. The computer 10 comprises a computer main body 11 and a touch screen display 17. The computer main body 11 includes a housing having a thin box shape. The touch screen display 17 is disposed on a surface of the computer main body 1. The touch screen display 17 includes a flat panel display (such as a liquid crystal display (LCD)) and a touch panel. The touch panel is provided to cover a screen of the LCD. The touch panel is configured to detect a position on the touch screen display 17 which is touched by a user's finger or a pen.

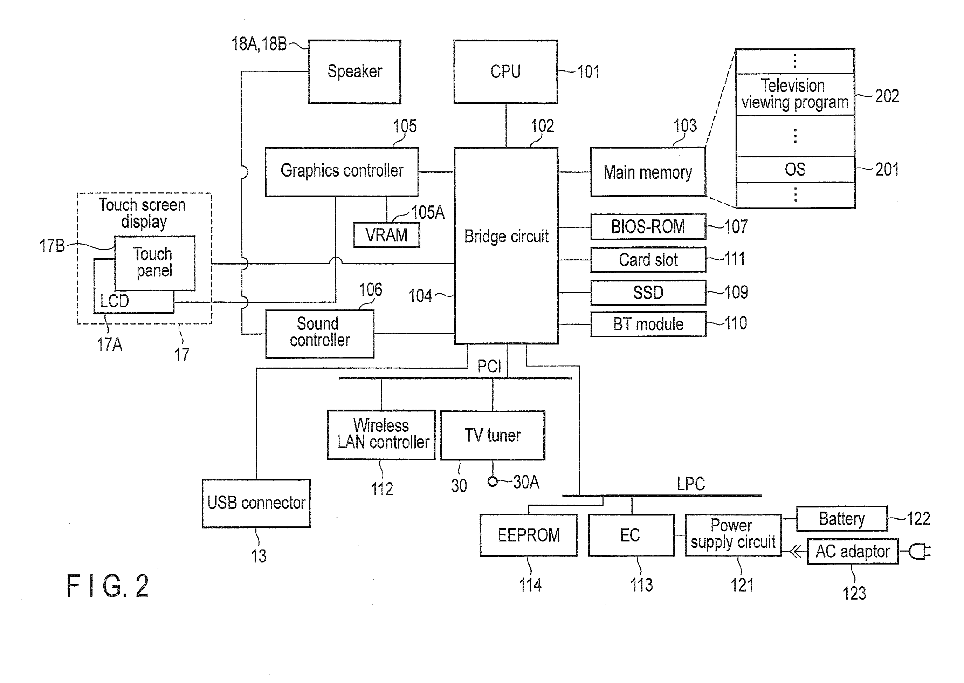

FIG. 2 is a block diagram illustrating an example of a system configuration of the computer 10.

The computer 10 comprises a central processing unit (CPU) 101, a bridge circuit 102, a main memory 103, a graphics controller (GPU) 105, a sound controller 106, a BIOS-ROM 107, a solid state drive (SSD) 109, a BT (Bluetooth (Registered Trademark)) module 110, a card slot 111, a wireless LAN controller 112, an embedded controller (EC) 113, an EEPROM 114, a USB connector 13, the touch screen display 17, and a video memory (VRAM) 105A, and the like.

The CPU 101 is a processor which controls operations of the modules in the computer 10. The CPU 101 executes an operating system (OS) 201 and various application programs, which are loaded from the SSD 109 into the main memory 103. The application programs include a television viewing program 202.

The television viewing program 202 executes live reproduction processing for viewing broadcasting program data which is received by a TV tuner 30, and processing for displaying an electronic program guide based on electronic program data which is received by the TV tuner 30.

It is supposed that the OS 201 is, for example, Android (Registered Trademark) OS in the present embodiment. Specifically, suppose that a system using Android (Registered Trademark) OS is used, and that the computer 10 is equipped with Android (Registered Trademark) OS. In the present embodiment, the computer 10 may be equipped with an OS other than Android (Registered Trademark) OS as the OS 201. Specifically, since the system explained in the present embodiment is applicable to a system equipped with another OS, the system explained in the present embodiment is applicable to computer 10 which is equipped with an OS other than Android (Registered Trademark) OS.

The CPU 101 also executes a BIOS (basic input/output system) which is stored in the BIOS-ROM 107. The BIOS is a program configured to control hardware.

The bridge circuit 102 is a bridge device which connects a local bus of the CPU 101 with each device on a PCI (Peripheral Component Interconnect) bus and each device on an LPC (Low Pin Count) bus. The bridge circuit 102 includes a serial ATA (Advanced Technology Attachment) controller configured to control the SSD 109. The bridge circuit 102 also has a function of executing communication with the sound controller 106. The bridge circuit 102 also has a function of executing communication with the GPU 105 through a serial bus of the PCI EXPRESS standard.

The GPU 105 is a display controller which controls an LCD 17A that is used as a display monitor of the computer 10. Image signals (also referred to as display signals) which are generated by the GPU 105 are transmitted to the LCD 17A.

The sound controller 106 is a sound source device, and outputs audio data to be reproduced to a speaker 18A and a speaker 18B. The wireless LAN controller 112 is a wireless communication device which executes wireless communication of, for example, the IEEE 802.11 standard.

The EC 113 is an embedded controller configured to manage electric power. The EC 113 has a function of turning on/off the computer 10 in response to operation by the user. A power supply circuit 121 generates operation electric power which is to be supplied to the components, by using electric power which is supplied from a battery 122 in the computer 10, or electric power which is supplied from an external power source such as an AC adaptor 123. The power supply circuit 121 also charges the battery 122 by using electric power supplied from the external power source.

A touch panel 17B is integrated into the touch screen display 17, as well as the LCD 17A. The touch panel 17B which is superposed on the LCD 17A includes a sensor and an MCU (Micro controller unit) and the like. When a touching operation is performed on the touch panel 17B, the touched position is detected by the sensor, and the MCU outputs input information which includes the touched position on the touch panel 17B.

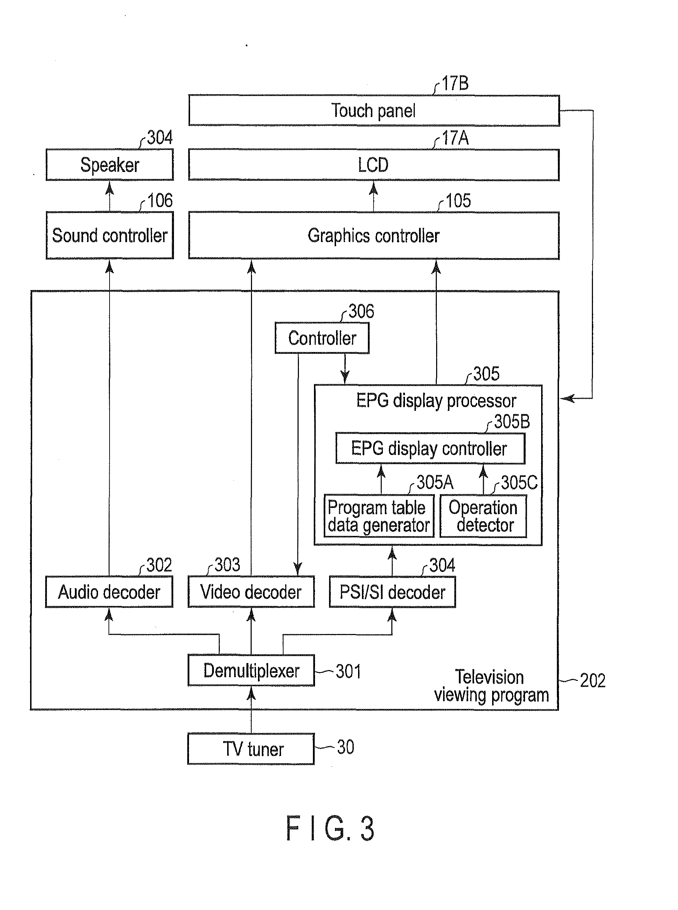

FIG. 3 is a block diagram illustrating a structure of the television viewing program 202.

As illustrated in FIG. 3, the television viewing program 202 includes a demultiplexer 301, an audio decoder 302, a video decoder 303, a PSI/SI decoder 304, an EPG display processor 305, and a controller 306.

The demultiplexer 301 separates PSI/SI (Program Specific Information/Service Information), video data, and audio data from TS (Transport Stream) packets which are output from the TV tuner 30. The demultiplexer 301 outputs the separated audio data to the audio decoder 302, outputs the separated video data to the video decoder 303, and outputs the separated PSI/SI to the PSI/SI decoder 304.

The audio decoder 302 decodes the audio data, and outputs the decoded audio data to the sound controller 106. The video decoder 303 decodes the video data.

The PSI/SI decoder 304 decodes the PSI/SI. The PSI/SI decoder 304 outputs the decoded data to the EPG display processor 305. The PSI (program specific information) is information for identifying information which is included in each TS packet. The SI (service information) is obtained by expanding the PSI to include program information such as a program name and an electronic program guide (EPG). The EPG display processor 305 prepares EPG display data for displaying an electronic program guide including a program table, based on the program information.

The EPG display processor 305 includes a program table data generator 305A, an EPG display controller 305B, and an operation detector 305C.

The program table data generator 305A generates program table data. The program table data comprises program information formed of information such as the broadcasting start time, the broadcasting time, the broadcasting station, the program title, the performers, and the summary, and program information items are arranged on a two-dimensional plane based on the dates and the broadcasting stations, with one program serving as a cell. Then, the information items of the programs are databased by the program table data generator 305A, such that each program information item can be selected based on the broadcasting date and the broadcasting station. The EPG display controller 305B generates EPG display data for displaying an electronic program guide based on the program table data.

The touch panel 17B outputs information, which includes the touched position on the touch panel 17B, to the television viewing program 202. Based on the input information, the controller 306 detects a user operation, and one of the video decoder 303 and the EPG display processor 305 requests output of the display data to the graphic controller 105, in accordance with the detection result.

When the EPG display processor 305 outputs EPG display data to the graphics controller 105, input information from the touch panel 17B is supplied to the operation detector 305C.

The operation detector 305C detects an operated position and an operation type, based on the input information which includes the touched position on the touch panel 17B. The operation type includes a touching operation, tapping operation, sliding operation, and pinching operation (pinch-in operation and pinch-out operation). The touching operation is an operation of touching the display. The tapping operation is an operation of a user touching the screen by a finger and thereafter separating the finger from the screen. The sliding operation is an operation of a user moving the finger which is touching the screen in a target direction while the finger is in contact with the screen.

The operation detector 305C detects that a touching operation is performed on the screen, based on the input information from the touch panel 17B. The EPG display processor 305 detects a user operation (such as a tapping operation and sliding operation), based on the input information from the touch panel 17B after the touching operation is detected. In other words, the EPG display processor 305 detects a user operation (such as a tapping operation and sliding operation), based on a change of the input information from the touch panel 17B.

A tapping operation or sliding operation is performed on a date bar 440, and thereby the EPG display controller 305B prepares EPG display data for changing or scrolling the display contents of a program table described later.

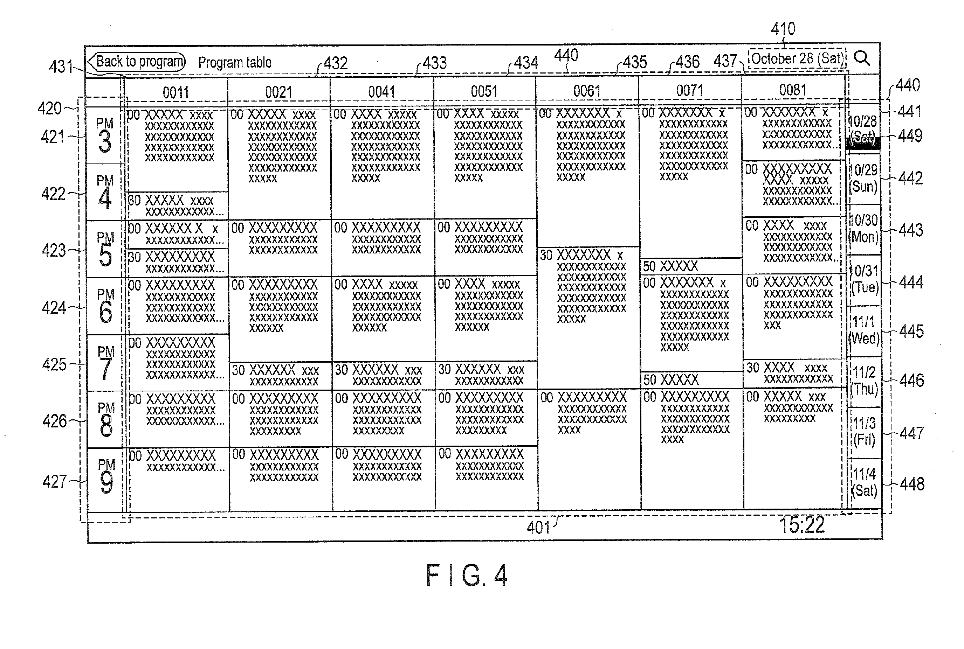

FIG. 4 is a diagram illustrating an example of an electronic program guide which is displayed on the LCD 17A based on the EPG display data generated by the television viewing program 202. The electronic program guide 400 shows information of programs which are broadcasted by seven broadcasting stations "0011", "0021", "0041", "0051", "0061", "0071" and "0081" from 3:00 p.m. to 10:59 p.m. on October 28 (Sat).

The electronic program guide 400 includes a program table 401, date 410, a time display bar 420, a broadcasting station display bar 430, and date bar 440.

The program table 401 is displayed in the center of the electronic program guide 400. The date 410 is displayed in an upper right end part of the electronic program guide 400. The time display bar 420 is displayed on the left of the program table 401. The broadcasting station display bar 430 is displayed above the program table 401. The date bar 440 is displayed on the right of the program table 401.

The date 410 indicates the date on which the programs which are displayed in the program table 401 are broadcasted. In the example illustrated in FIG. 4, "October 28 (Sat)" is displayed as the date 410.

In the example illustrated in FIG. 4, eight time period sections 421 to 427 are arranged in a row direction in the time display bar 420. The time period section 421 corresponds to a time period from 3:00 p.m. to 3:59 p.m. which is 59 minutes after 3:00 p.m., the time period section 422 corresponds to a time period from 4:00 p.m. to 4:59 p.m. which is 59 minutes after 4:00 p.m., the time period section 423 corresponds to a time period from 5:00 p.m. to 5:59 p.m. which is 59 minutes after 5:00 p.m., the time period section 424 corresponds to a time period from 6:00 p.m. to 6:59 p.m. which is 59 minutes after 6:00 p.m., the time period section 425 corresponds to a time period from 7:00 p.m. to 7:59 p.m. which is 59 minutes after 7:00 p.m., the time period section 426 corresponds to a time period from 8:00 p.m. to 8:59 p.m. which is 59 minutes after 8:00 p.m., and the time period section 427 corresponds to a time period from 9:00 p.m. to 9:59 p.m. which is 59 minutes after 9:00 p.m.

Broadcasting station sections 431 to 437 are arranged in a column direction in the broadcasting station display bar 430. In the example illustrated in FIG. 4, the broadcasting station section 431 corresponds to "0011", the broadcasting station section 432 corresponds to "0021", the broadcasting station section 433 corresponds to "0041", the broadcasting station section 434 corresponds to "0051", the broadcasting station section 435 corresponds to "0061", the broadcasting station section 436 corresponds to "0071", and the broadcasting station section 437 corresponds to "0081".

Date sections 441 to 448 are arranged in the row direction in the date bar 440. The date section 441 corresponds to "10/28 (Sat)", the date section 442 corresponds to "10/29 (Sun)", the date section 443 corresponds to "10/30 (Mon)", the date section 444 corresponds to "10/31 (Tue)", the date section 445 corresponds to "11/1 (Wed)", the date section 446 corresponds to "11/2 (Thu)", the date section 447 corresponds to "11/3 (Fri)", and the date section 448 corresponds to "11/4 (Sat)".

A date mark 449 which indicates the date and the time periods of the programs which are displayed at present in the program table 401 is displayed in the date bar 440. In the example illustrated in FIG. 4, the date mark 449 is displayed in a part which corresponds to the time period from 3:00 p.m. to 10:59 p.m. in the date section 441 that corresponds to the date "October 28 (Sat)".

### (Tapping Operation)

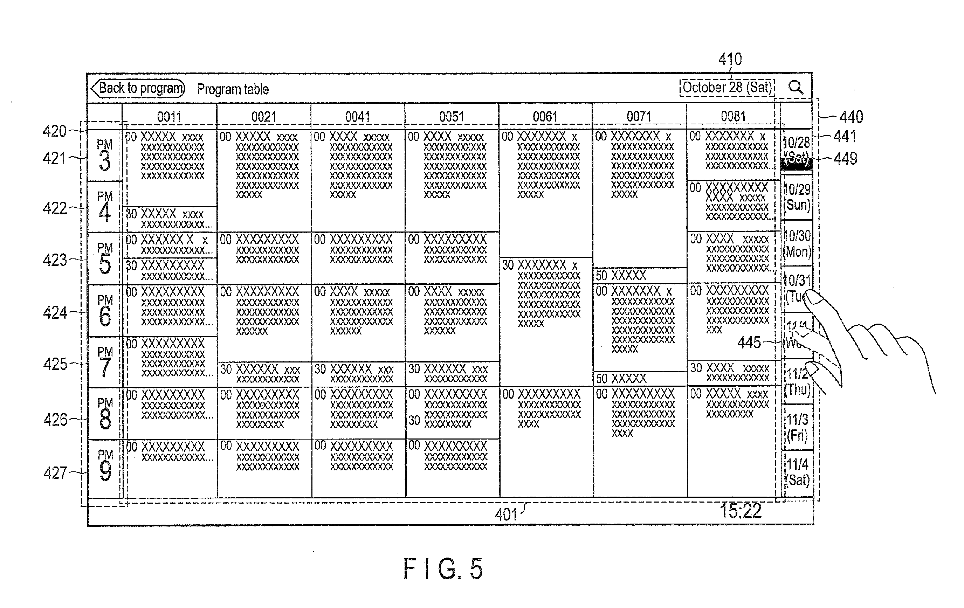

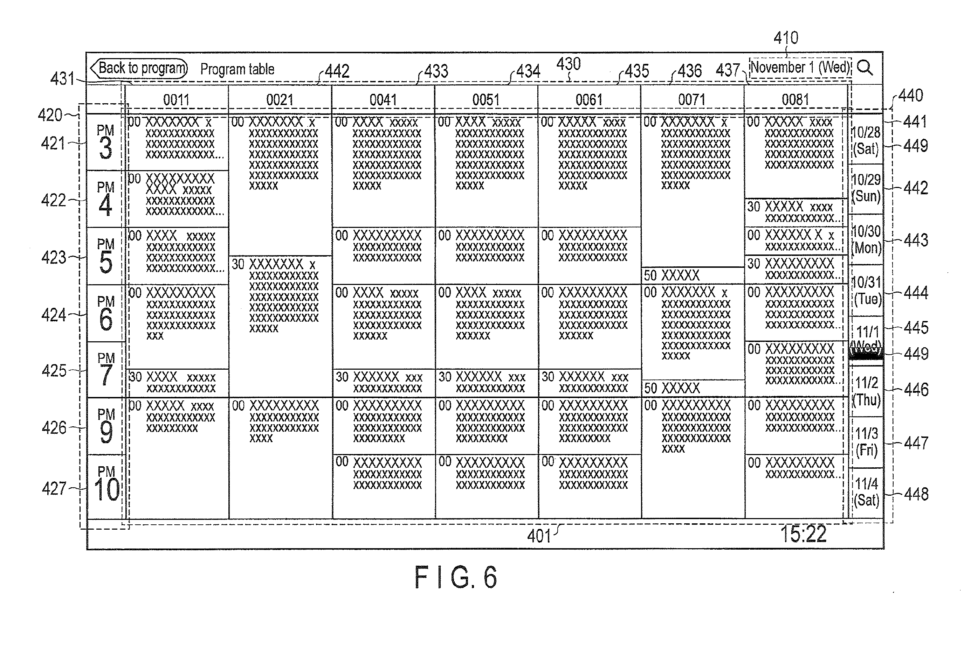

FIG. 5 is a diagram illustrating the electronic program guide in which a touching operation is performed on the date section 445 which corresponds to the date "November 1 (Wed)". FIG. 6 is a diagram illustrating the electronic program guide in which a tapping operation is performed on the date section 445 which corresponds to the date "November 1 (Wed)".

When the user performs a tapping operation on the date section 445 which corresponds to the date "November 1 (Wed)", information of programs which are broadcasted by the seven broadcasting stations "0011", "0021", "0041", "0051", "0061", "0071" and "0081" from 3:00 p.m. to 10:59 p.m. on November 1 (Wed) is displayed in the program table 401, as illustrated in FIG. 6. When a tapping operation is performed, the information of programs which is displayed in the program table 401 is changed to information of programs which are being broadcasted in a time period, which was displayed before the tapping operation, on the date which corresponds to the date section for which the tapping operation is performed.

### (Sliding Operation)

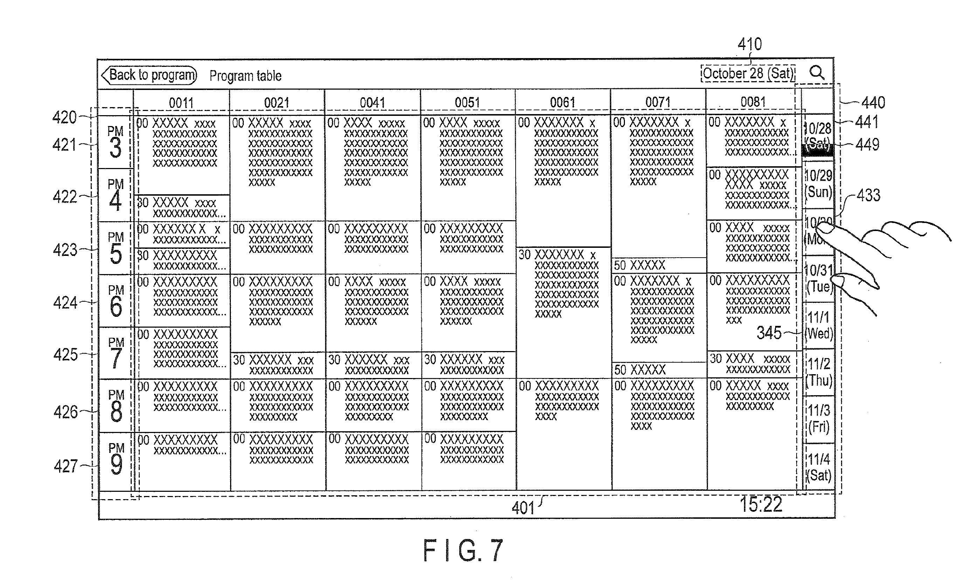

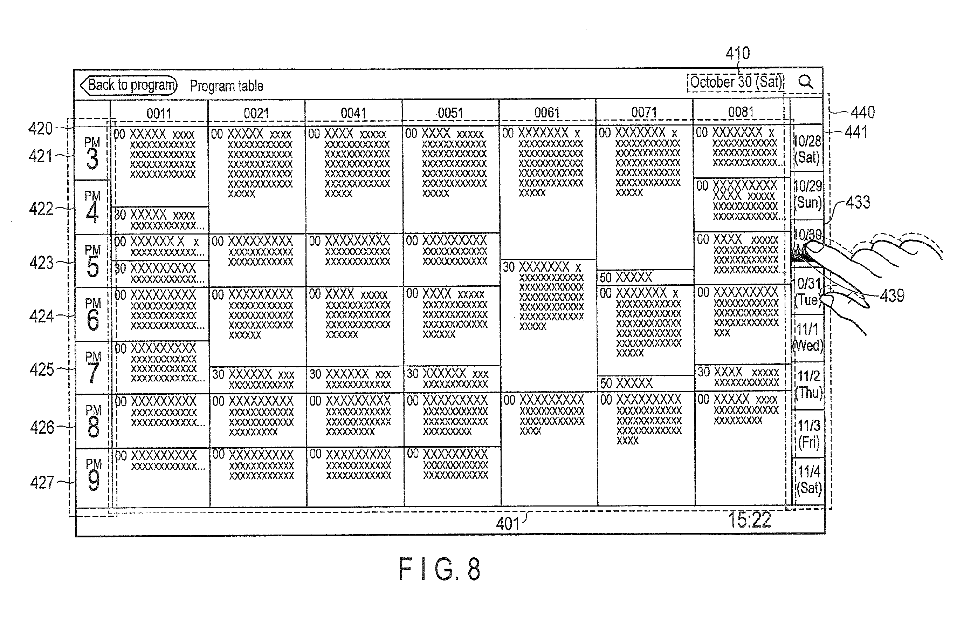

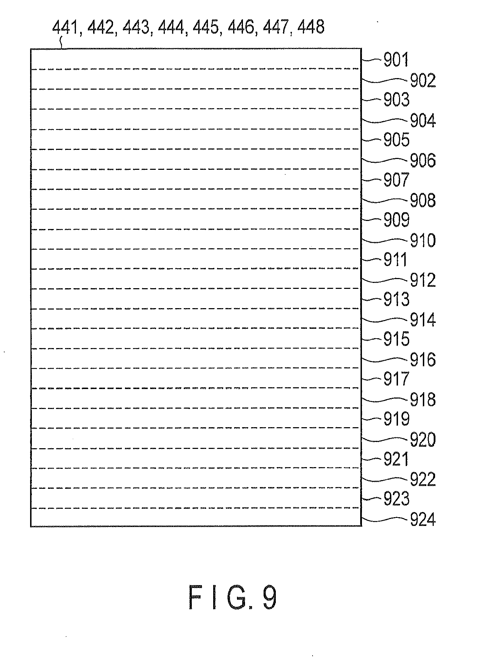

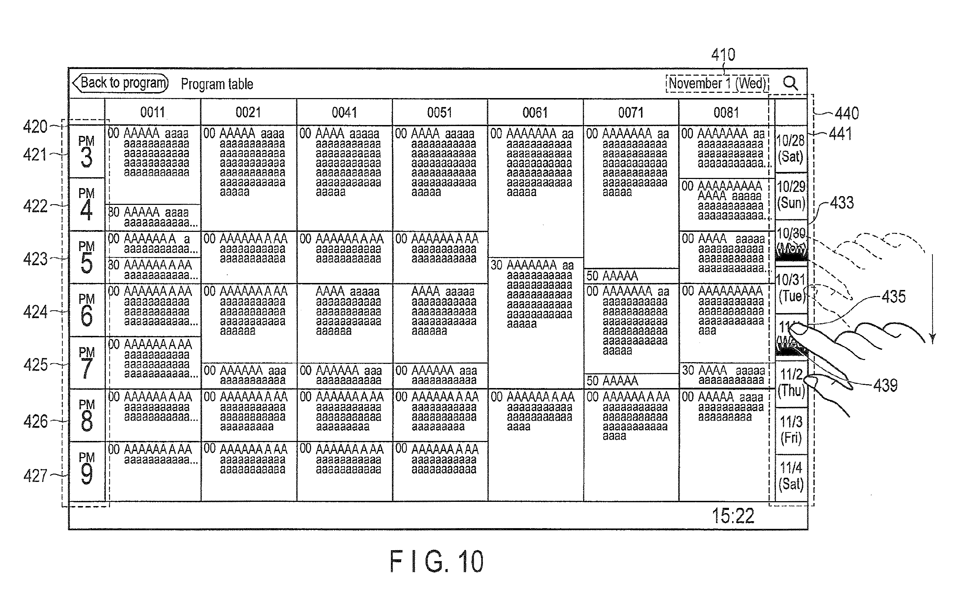

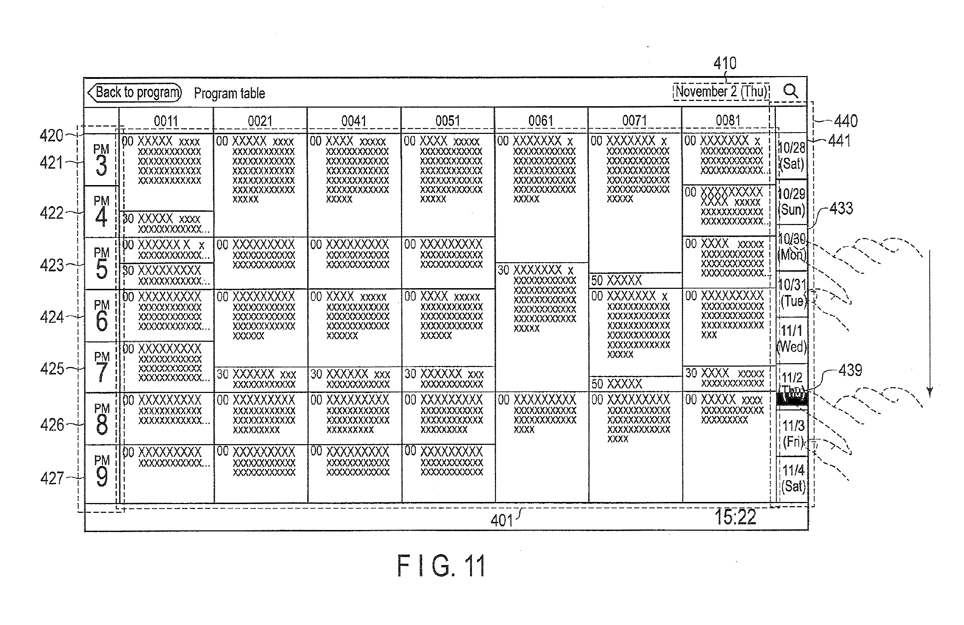

FIG. 7 is a diagram illustrating the electronic program guide at the time when a touching operation is performed on the date section 443 which corresponds to the date "October 30 (Mon)". FIG. 8 is a diagram illustrating the electronic program guide at the time when a sliding operation is started from the state illustrated in FIG. 7. FIG. 9 is a diagram illustrating time period regions which are set in the date section. FIG. 10 is a diagram illustrating the electronic program guide at the time when a sliding operation is being performed. FIG. 11 is a diagram illustrating the electronic program guide when a sliding operation is finished.

As illustrated in FIG. 7, in a state in which the user is touching the screen, the display contents of the program table 401 are not changed. As illustrated in FIG. 8, when the user starts a sliding operation, the display contents of the program table 401 start to change. When the user starts sliding the finger on the date section 443 which corresponds to the date "October 30 (Wed)", information of programs which are broadcasted by the seven broadcasting stations "0011", "0021", "0041", "0051", "0061", "0071" and "0081" from 3:00 p.m. to 10:59 p.m. on November 1 (Wed) is displayed in the program table 401, as illustrated in FIG. 8. In other words, when the user starts the sliding operation, information of programs which is displayed on the program table 401 is changed to information of programs which are broadcasted in a time period, which corresponds to the touched position, on the date that corresponds to the touched date section.

As illustrated in FIG. 9, twenty-four time period regions 901 to 924 are set for the date sections 441 to 448. The time period region 901 corresponds to a time period from 0:00 a.m. to 6:59 a.m. The time period region 902 corresponds to a time period from 1:00 a.m. to 7:59 a.m. The time period region 903 corresponds to a time period from 2:00 a.m. to 8:59 a.m. The time period region 904 corresponds to a time period from 3:00 a.m. to 9:59 a.m. The time period region 905 corresponds to a time period from 4:00 a.m. to 10:59 a.m. The time period region 906 corresponds to a time period from 5:00 a.m. to 11:59 a.m. The time period region 907 corresponds to a time period from 6:00 a.m. to 0:59 p.m. The time period region 908 corresponds to a time period from 7:00 a.m. to 1:59 p.m. The time period region 909 corresponds to a time period from 8:00 a.m. to 2:59 p.m. The time period region 910 corresponds to a time period from 9:00 a.m. to 3:59 p.m. The time period region 911 corresponds to a time period from 10:00 a.m. to 4:59 p.m. The time period region 912 corresponds to a time period from 11:00 a.m. to 5:59 a.m. The time period region 913 corresponds to a time period from 0:00 p.m. to 6:59 p.m. The time period region 914 corresponds to a time period from 1:00 p.m. to 7:59 p.m. The time period region 915 corresponds to a time period from 2:00 p.m. to 8:59 p.m. The time period region 916 corresponds to a time period from 3:00 p.m. to 9:59 p.m. The time period region 917 corresponds to a time period from 4:00 p.m. to 10:59 p.m. The time period region 918 corresponds to a time period from 5:00 p.m. to 11:59 p.m. The time period region 919 corresponds to a time period from 6:00 p.m. to 0:59 a.m. of the next day. The time period region 920 corresponds to a time period from 7:00 p.m. to 1:59 a.m. of the next day. The time period region 921 corresponds to a time period from 8:00 p.m. to 2:59 a.m. of the next day. The time period region 922 corresponds to a time period from 9:00 p.m. to 3:59 a.m. of the next day. The time period region 923 corresponds to a time period from 10:00 p.m. to 4:59 a.m. of the next day. The time period region 924 corresponds to a time period from 11:00 p.m. to 5:59 a.m. of the next day.

The EPG display processor 305 detects the touched date section and the touched time period region, based on the input information from the touch panel 17B. The EPG display processor 305 generates EPG display data for displaying information of programs which are broadcasted in a time period that corresponds to the time period region of the date that corresponds to the detected date section.

While a sliding operation is being performed, the EPG display processor 305 successively generates EPG display data which corresponds to the date section and the time period region, such that the display contents of the program table 401 are scrolled in accordance with the date section and the time period region which correspond to the touched position. As illustrated in FIG. 10, when the user's finger is placed on the date section 445 during the sliding operation, the display contents are changed to information of a time period of November 1 (Wed), which corresponds to the date section 445, in accordance with the sliding quantity of the user's finger.

When sliding is finished, the EPG display processor 305 generates EPG display data which corresponds to the position in which sliding is finished. As illustrated in FIG. 11, when the user's finger is placed on the date section 445 during a sliding operation, the display contents are changed to information of a time period of November 2 (Thu), which corresponds to the date section 445, in accordance with the sliding quantity of the user's finger.

### (Pinching Operation)

By performing a pinching operation on the program table 401 by the user, it is possible to change the width of the time period which is displayed in the program table 401. The pinching operation includes a pinch-in operation and pinch-out operation. The pinch-in operation is an operation of narrowing the distance between the user's two fingers which are in contact with the screen, with the fingers kept in contact with the screen. The pinch-put operation is an operation of broadening the distance between the user's two fingers which are in contact with the screen, with the fingers kept in contact with the screen.

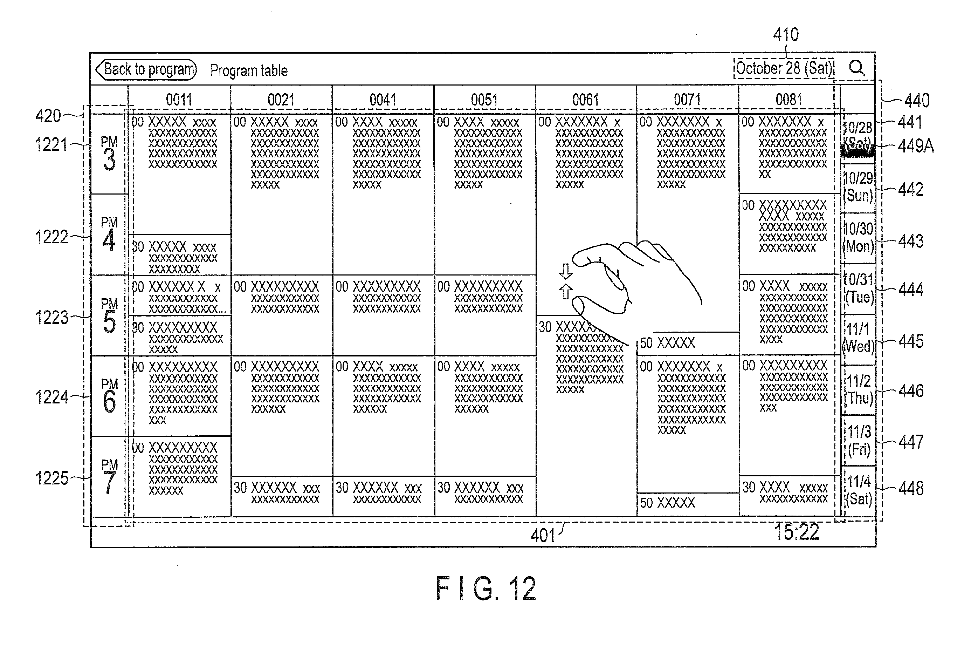

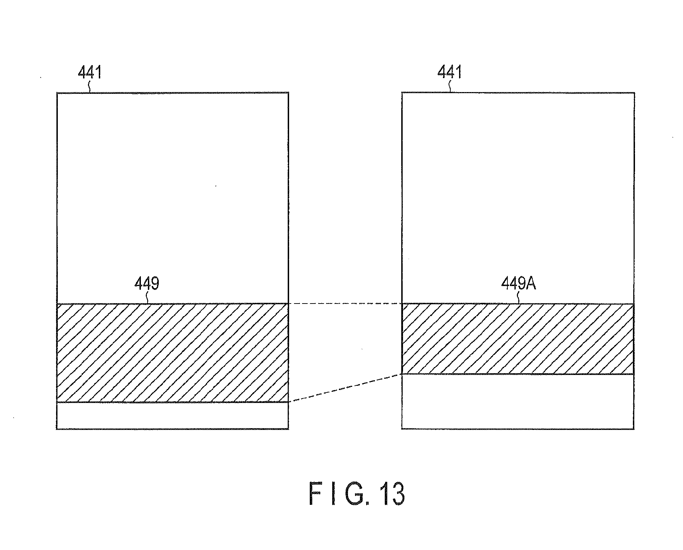

FIG. 12 is a diagram illustrating the electronic program guide at the time when the pinch-in operation is performed. FIG. 13 is a diagram illustrating a date mark 449 in the date section 441 illustrated in FIG. 4 and a date mark 449A in the date section 441 illustrated in FIG. 12. The left part of FIG. 13 illustrates the date mark 449 in the date section 441 illustrated in FIG. 4, and the right part of FIG. 13 illustrates the date mark 449A in the date section 441 illustrated in FIG. 12.

As illustrated in FIG. 12, five time period sections 1221 to 1225 are arranged in the row direction in a time display bar 1240. The time period section 1241 corresponds to a time period from 3:00 p.m. to 3:59 p.m. which is 59 minutes after 3:00 p.m., the time period section 1242 corresponds to a time period from 4:00 p.m. to 4:59 p.m. which is 59 minutes after 4:00 p.m., the time period section 1243 corresponds to a time period from 5:00 p.m. to 5:59 p.m. which is 59 minutes after 5:00 p.m., the time period section 1244 corresponds to a time period from 6:00 p.m. to 6:59 p.m. which is 59 minutes after 6:00 p.m., and the time period section 1245 corresponds to a time period from 7:00 p.m. to 7:59 p.m. which is 59 minutes after 7:00 p.m.

When a pinch-in operation is performed on the program table 401 for the electronic program guide in the state illustrated in FIG. 4, information of programs which are broadcasted in the time period from 3:00 p.m. to 7:59 p.m. is displayed in the program table 401. Although information of programs which are broadcasted in a time period of about 7 hours is displayed in the program table 401 illustrated in FIG. 4, information of programs which are broadcasted in a time period of about 5 hours is displayed in the program table 401 illustrated in FIG. 12. By shortening the time period, it is possible to display more information of the programs.

In addition, as illustrated in FIG. 13, the height of the date mark 449A in the date section 441 is changed, in accordance with the change of the time period which is displayed in the program table 401. Since the time period of the program table 401 illustrated in FIG. 12 is shortened, the height of the date mark 449A of FIG. 12 is larger than the height of the date mark 449 illustrated in FIG. 4.

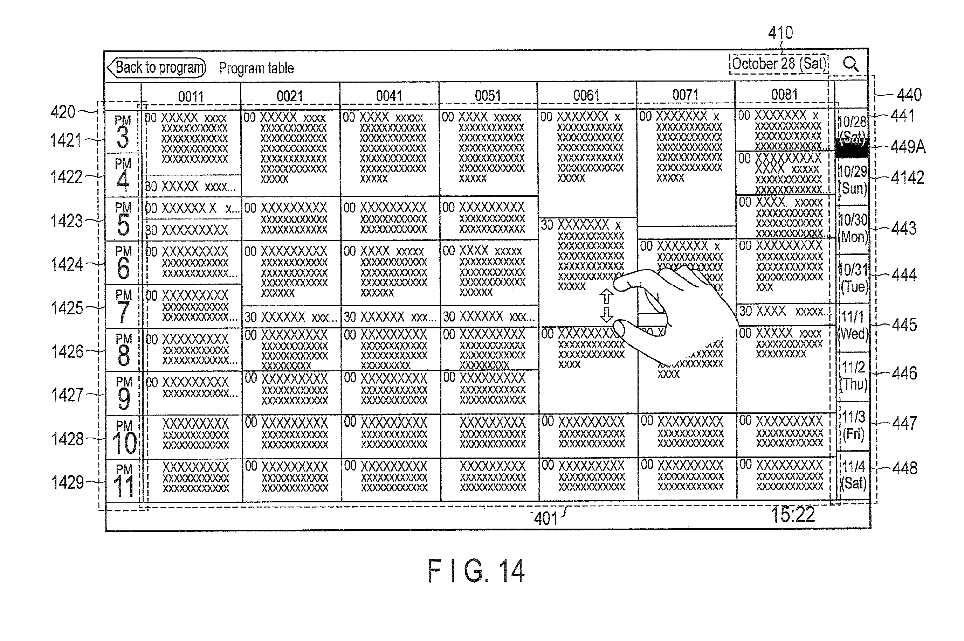

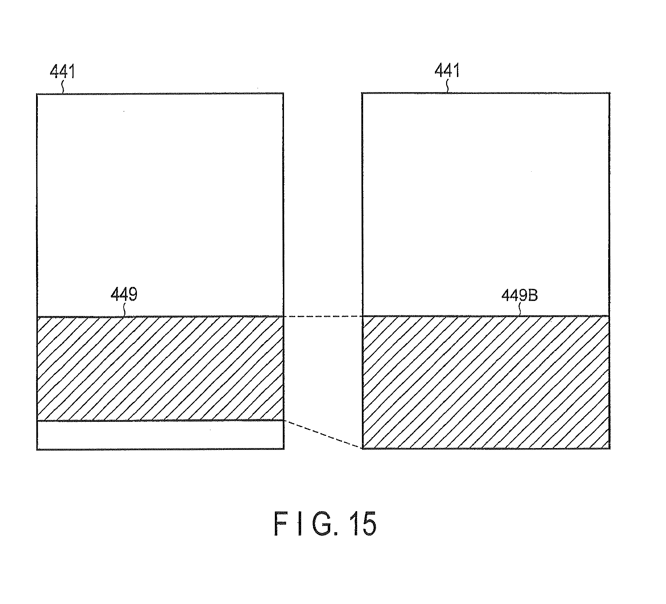

FIG. 14 is a diagram illustrating the electronic program guide at the time when a pinch-out operation is performed. FIG. 15 is a diagram illustrating a date mark 449 in the date section 441 illustrated in FIG. 4 and a date mark 449B in the date section 441 illustrated in FIG. 14. The left part of FIG. 15 illustrates the date mark 449 in the date section 441 illustrated in FIG. 4, and the right part of FIG. 15 illustrates the date mark 449B in the date section 441 illustrated in FIG. 14.

As illustrated in FIG. 14, nine time period sections 1441 to 1449 are arranged in the row direction in a time display bar 1440. The time period section 1441 corresponds to a time period from 3:00 p.m. to 3:59 p.m. which is 59 minutes after 3:00 p.m., the time period section 1442 corresponds to a time period from 4:00 p.m. to 4:59 p.m. which is 59 minutes after 4:00 p.m., the time period section 1443 corresponds to a time period from 5:00 p.m. to 5:59 p.m. which is 59 minutes after 5:00 p.m., the time period section 1444 corresponds to a time period from 6:00 p.m. to 6:59 p.m. which is 59 minutes after 6:00 p.m., the time period section 1445 corresponds to a time period from 7:00 p.m. to 7:59 p.m. which is 59 minutes after 7:00 p.m., the time period section 1446 corresponds to a time period from 8:00 p.m. to 8:59 p.m. which is 59 minutes after 8:00 p.m., the time period section 1447 corresponds to a time period from 9:00 p.m. to 9:59 p.m. which is 59 minutes after 9:00 p.m., the time period section 1448 corresponds to a time period from 10:00 p.m. to 10:59 p.m. which is 59 minutes after 10:00 p.m., and the time period section 1449 corresponds to a time period from 11:00 p.m. to 11:59 p.m. which is 59 minutes after 11:00 p.m.

When a pinch-out operation is performed on the program table 401 for the electronic program guide illustrated in FIG. 4, information of programs which are broadcasted in the time period from 3:00 p.m. to 11:59 p.m. is displayed in the program table 401. Although information of programs which are broadcasted in a time period of about 7 hours is displayed in the program table 401 illustrated in FIG. 4, information of programs which are broadcasted in a time period of about 9 hours is displayed in the program table 401 illustrated in FIG. 14. By lengthening the time period, information of programs which is displayed in the program table is reduced.

In addition, as illustrated in FIG. 15, the height of the date mark 449B in the date section 441 is changed in accordance with a change of the time period which is displayed in the program table 401. Since the time period of the program table 401 illustrated in FIG. 14 is lengthened, the height of the date mark 449B of FIG. 14 is larger than the height of the date mark 449 illustrated in FIG. 4.

### (EPG Display Processor)

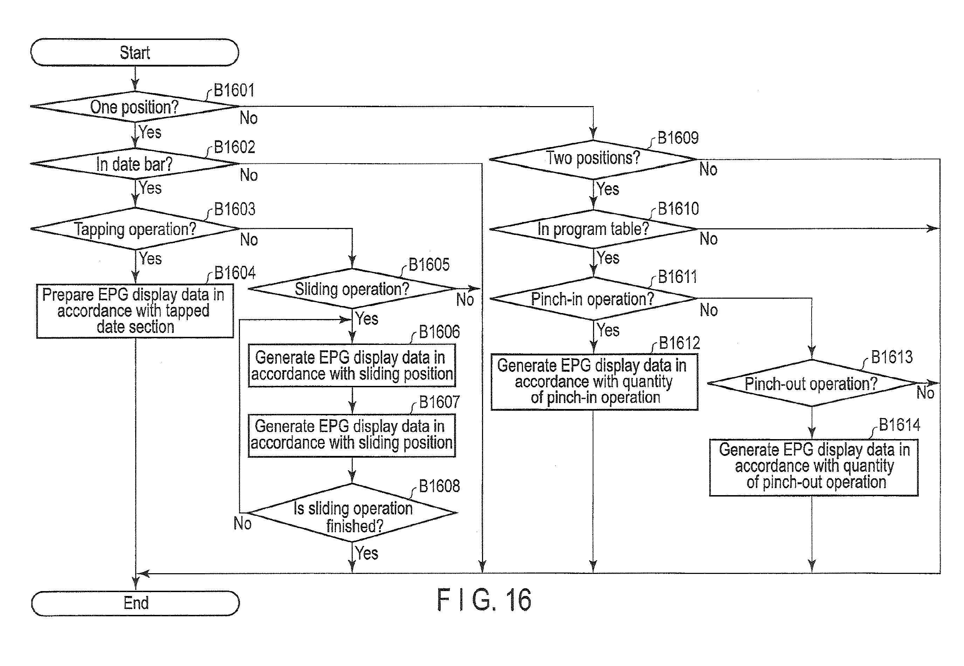

Next, operation of the EPG display processor 305 will be explained hereinafter with reference to FIG. 16.

FIG. 16 is a flowchart illustrating electronic program guide display processing which is performed by the EPG display processor when the electronic program guide is displayed.

When the EPG display processor 305 obtains input information from the touch panel 17B, the EPG display processor 305 determines whether position coordinates included in the input information indicate one position or not (Step B1601). When it is determined that the position coordinates indicate one position (Yes of Step B1601), the EPG display processor 305 determines whether the position coordinates are located in the date bar 440 (Step B1602). When it is determined that the position coordinates are located in the date bar 440 (Yes of Step B1602), the EPG display processor 305 determines whether the user operation is a tapping operation or not, based on the input information from the touch panel 17B (Step B1603). When it is determined that the user operation is a tapping operation (Yes of Step B1603), the EPG display processor 305 generates EPG display data for displaying program table 401 which includes information of programs that are broadcasted in the time period, which was displayed before tapping operation, of the date of the date section that corresponds to the position of the tapping operation, and outputs the generated EPG display data to the graphics controller 105 (Step B1604).

When it is determined that the user operation is not a tapping operation (No of Step B1603), the EPG display processor 305 determines whether the user operation is a sliding operation or not, based on the input information from the touch panel 17B (Step B1605). When it is determined that the user operation is a sliding operation (Yes of Step B1605), the EPG display processor 305 generates EPG display data for displaying electronic program guide 400 which includes program table 401 that corresponds to the position at which the sliding operation is started, and outputs the generated EPG display data to the graphics controller 105 (Step B1606). The EPG display processor 305 generates EPG display data for displaying electronic program guide 400 which includes program table 401 that corresponds to the position at which the sliding operation is started, and outputs the generated EPG display data to the graphics controller 105 (Step B1607). The EPG display processor 305 determines whether the sliding operation is finished or not, based on presence/absence of input information from the touch panel 17B (Step B1608). When it is determined that the sliding operation is not finished (No of Step B1608), the EPG display processor 305 performs the processing of Step B. When it is determined that the sliding operation is finished (Yes of Step B1608), the EPG display processor 305 outputs the last generated EPG display data to the graphic controller 105.

When it is determined at Step B1601 that the position coordinates do not indicate one position (No of Step B1601), the EPG display processor 305 determines whether the position coordinates included in the input information indicate two positions (Step B1609). When it is determined that the position coordinates indicate two positions (Yes of Step B1609), the EPG display processor 305 determines whether the two pairs of position coordinates are located in the program table 401, based on the input information from the touch panel 17B (Step B1610). When it is determined that the two pairs of position coordinates are located in the program table 401, the EPG display processor 305 determines whether the user operation is a pinch-in operation or not, based on the input information from the touch panel 17B (Step B1611). When it is determined that the user operation is a pinch-in operation (Yes of Step B1611), the EPG display processor 305 generates EPG display data for displaying electronic program guide 400 which includes program table 401 with a changed time period according to the operation quantity of the pinch-in operation, and outputs the generated EPG display data to the graphics controller 105 (Step B1612).

When it is determined that the user operation is not a pinch-in operation (No of Step B1611), the EPG display processor 305 determines whether the user operation is a pinch-out operation or not, based on the input information from the touch panel 17B (Step B1613). When it is determined that the user operation is a pinch-out operation (Yes of Step B1613), the EPG display processor 305 generates EPG display data for displaying electronic program guide 400 which includes program table 401 with a changed time period according to the operation quantity of the pinch-out operation, and outputs the generated EPG display data to the graphics controller 105 (Step B1614).

When a sliding operation is performed, the display contents in the program table 401 may be scrolled in accordance with the moving quantity of the sliding operation, regardless of the date section which is located in the sliding operation starting position.

### (Modification)

In the above embodiment, the EPG display processor 305 changes the display contents of the program table 401, when a tapping operation or sliding operation is performed after a date section is touched. However, the EPG display processor 305 may change the display contents of the program table 401, when a date section is touched.

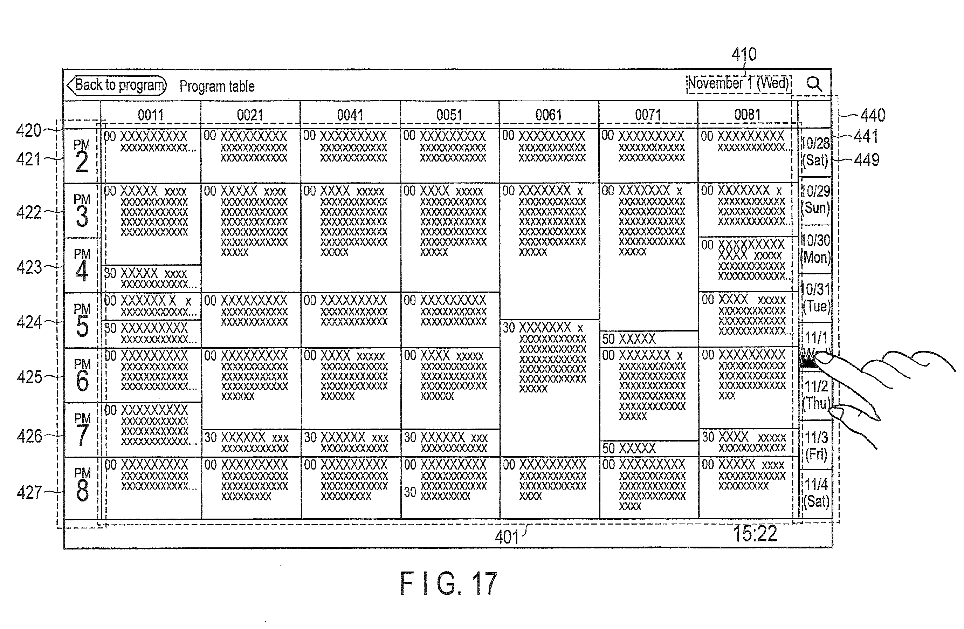

FIG. 17 is a diagram illustrating the electronic program guide at the time when a touching operation is performed on a date section which corresponds to the date "October 30 (Mon)" in the electronic program guide illustrated in FIG. 4.

As illustrated in FIG. 17, when a touching operation is performed, information of programs which are broadcasted in the time period from 3:00 p.m. to 9:59 p.m. that corresponds to the touched position in the date section of "October 30 (Mon)" that corresponds to the date section 445 is displayed in the program table 401.

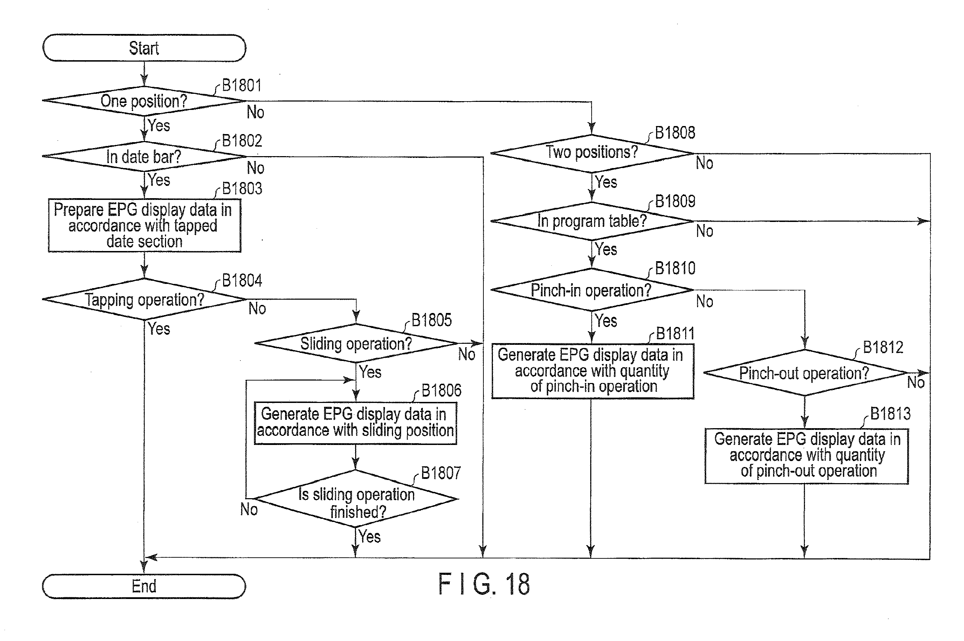

A process which is performed by the EPG display processor 305 in the case where the display contents of the program table 401 are changed when a date section is touched will be explained hereinafter with reference to FIG. 18.

FIG. 18 is a flowchart illustrating electronic program guide display processing which is performed by the EPG display processor when the electronic program guide is displayed.

When the EPG display processor 305 obtains input information from the touch panel 17B, the EPG display processor determines whether position coordinates which are included in the input information indicate one position or not (Step B1801). When it is determined that the position coordinates indicate one position (Yes of Step B1801), the EPG display processor 305 determines whether the position coordinates are located in the date bar 440 (Step B1802). When it is determined that the position coordinates are located in the date bar 440 (Yes of Step B1802), the EPG display processor 305 generates EPG display data for displaying program table 401 which includes information of programs that are broadcasted in the time period, which corresponds to the touched position in the touched date section, of the date which corresponds to the touched date section, and outputs the generated EPG display data to the graphics controller 105 (Step B1803).

The EPG display processor 305 determines whether the user operation is a tapping operation, based on the input information from the touch panel 17B (Step B1804). When it is determined that the user operation is not a tapping operation (No of Step B1804), the EPG display processor 305 determines whether the user operation is a sliding operation or not, ,based on the input information from the touch panel 17B (Step B1805). When it is determined that the user operation is a sliding operation (Yes of Step B1805), the EPG display processor 305 generates EPG display data for displaying electronic program guide 400 which includes program table 401 that corresponds to the position of the sliding operation, and outputs the generated EPG display data to the graphics controller 105 (Step B1806). The EPG display processor 305 determines whether the sliding operation is finished or not, based on presence/absence of input information from the touch panel 17B (Step B1807). When it is determined that the sliding operation is not finished (No of Step B1807), the EPG display processor 305 performs the processing of Step B. When it is determined that the sliding operation is finished (Yes of Step B1807), the EPG display processor 305 outputs the last generated EPG display data to the graphic controller 105.

When it is determined at Step B1801 that the position coordinates do not indicate one position (No of Step B1801), the EPG display processor 305 determines whether the position coordinates included in the input information indicate two positions (Step B1808). When it is determined that the position coordinates indicate two positions (Yes of Step B1808), the EPG display processor 305 determines whether the two pairs of position coordinates are located in the program table 401, based on the input information from the touch panel 17B (Step B1809). When it is determined that the two pairs of position coordinates are located in the program table 401, the EPG display processor 305 determines whether the user operation is a pinch-in operation or not, based on the input information from the touch panel 17B (Step B1810). When it is determined that the user operation is a pinch-in operation (Yes of Step B1810), the EPG display processor 305 generates EPG display data for displaying electronic program guide 400 which includes program table 401 with a changed time period according to the operation quantity of the pinch-in operation, and outputs the generated EPG display data to the graphics controller 105 (Step B1811).

When it is determined that the user operation is not a pinch-in operation (No of Step B1810), the EPG display processor 305 determines whether the user operation is a pinch-out operation or not, based on the input information from the touch panel 17B (Step B1812). When it is determined that the user operation is a pinch-out operation (Yes of Step B1812), the EPG display processor 305 generates EPG display data for displaying electronic program guide 400 which includes program table 401 with a changed time period according to the operation quantity of the pinch-out operation, and outputs the generated EPG display data to the graphics controller 105 (Step B1813).

Although the program information is obtained from the broadcasting waves in the above embodiment, the program information may be obtained from a server which is connected to the Internet.

According to the present embodiment, when a tapping operation or sliding operation is performed on the date bar, the display contents of the program table are changed, and thereby it is possible to provide an operation method which is suitable for changing the display contents in the program table.

The processing of each flowchart explained in the present embodiment can be achieved by a program, and the same effect as that of the present embodiment can be easily achieved, by installing and executing such software in an ordinary computer by using a storage medium which is readable by a computer and stores the software.

## Claims

1. An electronic apparatus comprising:
a display (17A);
an detector (17B) configured to detect an operation position on the display;
a receiver (304) configured to receive electronic program guide data comprising information of first and second programs, the first programs being broadcasted and the second programs being not yet broadcasted;
a generating module (305A) configured to generate program table data based on the electronic program guide data; and
a display controller (305B) configured to display, on the display, an electronic program guide and a date display area, the electronic program guide comprising a program table including information of programs broadcasted in a time period from a first time of a first date to a second time after the first time of the first date, the date display area comprising date sections corresponding to dates of programs,
wherein the display controller is configured to display, in the program table, information of programs broadcasted in a time period from the first time of a second date to the second time of the second date, if a tapping operation is detected on the second date section.

2. The apparatus of Claim 1, **characterized in that**
the display controller is configured to display, in the program table, information of programs broadcasted in a time period from a third time corresponding to a tapped position in a third date section of a third date corresponding to the third date section to a time the first period after the third time of the third date, when a tapping operation on the third date section and a sliding operation on the date display area are detected based on a change in the operation position, and to scroll display content in the program table in accordance with an operation position of the sliding operation and based on the program table data.

3. The apparatus of Claim 2, **characterized in that**
the display controller is configured to display, in the program table, information of programs broadcasted in a time period from the third time of the third date to a time the first minutes after the third time of the third date, when the tapping operation is detected.

4. The apparatus of Claim 2 or 3, **characterized in that**
the display controller is configured to display, in the program table, information of programs broadcasted in a time period from the third time of the third date to a time the first minutes after the third time of the third date, when the sliding operation is detected.

5. The apparatus of one of Claims 1 to 4, **characterized in that**
the display controller is configured to scroll display content in the program table in accordance with a quantity of a sliding operation, when the sliding operation is detected on the date display area.

6. The apparatus of one of Claims 1 to 5, **characterized in that**
the display controller is configured to display time width information in the date display area, the time width information indicating a time width displayed in the program table.

7. The apparatus of Claim 6, **characterized in that**
the display controller is configured to change from display of the time width information to display of a time period from the first time of the first date to a time second minutes after the first time of the first date, in accordance with a quantity of a pinch operation, when the pinch operation is detected on the program table.

8. The apparatus of Claim 7, **characterized in that**
the display controller is configured to display, in the program table, information of programs broadcasted in a time period from the first time of the first date to a time the second minutes after the first time of the first date.

9. An electronic apparatus, comprising:
a display (17A);
an detector (17B) configured to detect an operation position on the display;
a receiver (304) configured to receive electronic program guide data comprising information of first and second programs, the first programs being broadcasted and the second programs being not yet broadcasted;
a generator (305A) configured to generate program table data based on the electronic program guide data; and
a display controller (305B) configured to display, on the display, an electronic program guide and a date display area, the electronic program guide displayed based on the program table data and comprising information of programs broadcasted in a time period from a first time of a first date to a time first minutes after the first time of the first date, the date display area comprising date sections corresponding to dates of programs,
wherein the display controller is configured to display, in the program table, information of programs broadcasted in a time period from a second time of a second date corresponding to a second date section in the date display area to a time the first minutes after the second time of the second date, when a tapping operation is detected on the second date section based on the operation position, the second time corresponding to a tapped position in the second date section.

10. The apparatus of Claim 9, **characterized in that**
the display controller is configured to display, in the program table, information of programs broadcasted in a time period from a third time corresponding to a tapped position in a third date section of a third date corresponding to the third date section to a time the first period after the third time of the third date, when a tapping operation on the third date section and a sliding operation on the date display area are detected based on a change in the operation position, and to scroll display content in the program table in accordance with an operation position of the sliding operation and based on the program table data.

11. The apparatus of Claim 10, **characterized in that**
the display controller is configured to display, in the program table, information of programs broadcasted in a time period from the third time of the third date to a time the first minutes after the third time of the third date, when the tapping operation is detected.

12. The apparatus of Claim 10 or 11, **characterized in that**
the display controller is configured to display, in the program table, information of programs broadcasted in a time period from the third time of the third date to a time the first minutes after the third time of the third date, when the sliding operation is detected.

13. The apparatus of one of Claims 9 to 12, **characterized in that**
the display controller is configured to scroll display content in the program table in accordance with a quantity of a sliding operation, when the sliding operation is detected on the date display area.

14. The apparatus of one of Claims 9 to 13, **characterized in that**
the display controller is configured to display time width information in the date display area, the time width information indicating a time width displayed in the program table.

15. The apparatus of Claim 14, **characterized in that**
the display controller is configured to change from display of the time width information to display of a time period from the first time of the first date to a time second minutes after the first time of the first date, in accordance with a quantity of a pinch operation, when the pinch operation is detected on the program table.

16. The apparatus of Claim 15, **characterized in that**
the display controller is configured to display, in the program table, information of programs broadcasted in a time period from the first time of the first date to a time the second minutes after the first time of the first date.

17. A method of displaying an electronic program guide for an electronic apparatus, the method **characterized by** comprising:
receiving electronic program guide data comprising information of first and second programs, the first programs being broadcasted and the second programs being not yet broadcasted;
generating program table data based on the electronic program guide data; and
displaying an electronic program guide and a date display area, the electronic program guide displayed based on the program table data and comprising a program table including information of programs broadcasted in a time period from a first time of a first date to a time first minutes after the first time, the date display area comprising date sections corresponding to dates of programs,
displaying, in the program table, information of programs broadcasted in a time period from the first time of a second date corresponding to a second date section in the date display area to a time the first minutes after the first time of the second date, when a tapping operation is detected on the second date section based on an operation position detected on a display by an detector.
